# EUROPEAN PATENT SPECIFICATION

(11) **EP 2 665 241 B1**
(45) Date of publication and mention of the grant of the patent: **02.12.2015**
(21) Application number: 13180406.4
(22) Date of filing: 24.12.2009
(51) Int. Cl.: H04M 1/02, F16F 1/12

(54) **Sliding hinge mechanism**
GLEITSCHARNIERMECHANISMUS
MÉCANISME DE CHARNIÈRE COULISSANTE

(30) Priority: 26.12.2008 JP 2008332714
(43) Date of publication of application: 20.11.2013
(62) Divisional of application: 09834972.3
(73) Proprietor: Mitsubishi Steel MFG. CO., LTD., Chuo-ku, Tokyo 104-8550 (JP)
(72) Inventor: Kitamura, Kiichiro, Chiba, 290-0067 (JP); Sano, Masanori, Chiba, 290-0067 (JP); Higano, Sakae, Saitama, 336-0911 (JP)
(74) Representative: Schwabe - Sandmair - Marx

(56) References cited:
- EP-A2- 1 496 674
- EP-A2- 1 760 996
- EP-A2- 1 821 500
- WO-A1-2004/112267
- US-A1- 2010 248 797

## Description

### BACKGROUND OF THE INVENTION

### 1. Field of the Invention

The present invention relates to a hinge mechanism for use in an electronic device such as a cellular phone that typically has a main body section provided with an operation section such as a keyboard and a liquid crystal display segment that displays images, the hinge mechanism being suitable for use in a sliding device in which the main body section and the liquid crystal display segment are coupled slidably relative to each other.

### 2. Description of the Related Art

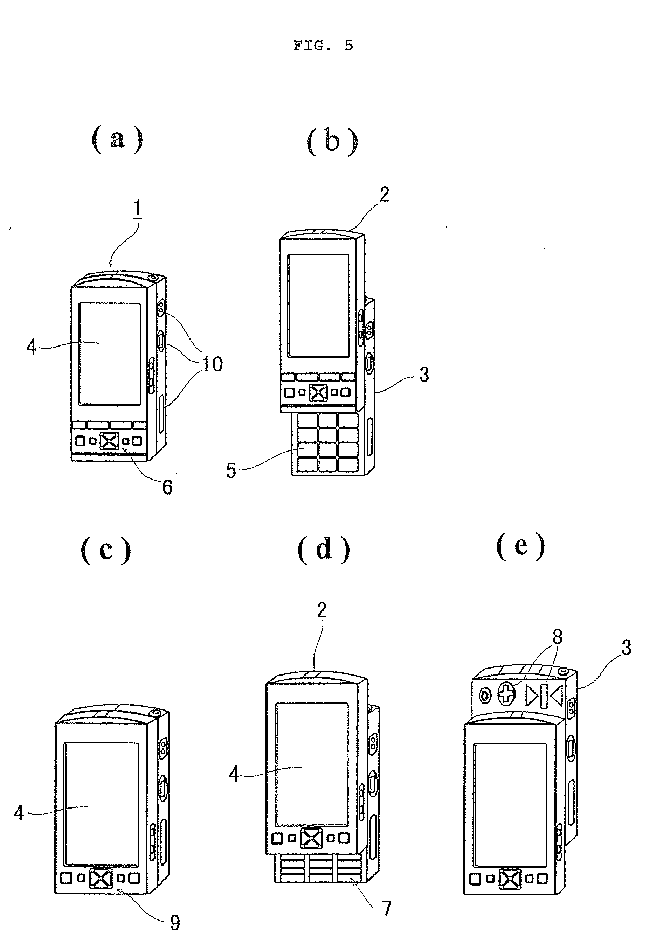

A typical sliding hinge mechanism incorporated in a sliding electronic device, for example a cellular phone, is a component that enables a series of operations from a first fixing position in which a liquid crystal display segment 4 is closed, as shown in FIG. 5(a), to a second fixing position (FIG. 5(b)) in which the liquid crystal display segment is open by holding a main body portion in one hand and sliding, through about 30 mm to 50 mm, the liquid crystal display segment by using, in particular, the thumb of the same hand, in case of typing in the numbers to call, operating the keyboard to send text messages, or operating the built-in camera.

As shown in FIGS. 5(a) and (b), in the operation of the conventional sliding hinge mechanism, when a second housing 2 provided with the liquid crystal display segment is pushed to the open state from the first fixing position (FIG. 5(a)) corresponding to the closed state with respect to a first housing 3 provided with the keyboard in the sliding cellular phone 1, at a substantially intermediate position of the slidability region, a force that tries to close the second housing 2 acts upon the second housing due to a pull-in torque created by the repulsive force of a spring, and where pushing is further continued from the intermediate position, an opening force automatically acts upon the second housing 2 and the completely open second fixing position such as shown in FIG. 5(b) is reached.

Conversely, when the second housing 2 provided with the liquid crystal display segment is returned by a finger or hand in the direction of closing from the second fixing position, the sequence of opening operations is reversed. The torque generated in this case acts in the direction of opening the second housing 2 before the intermediate position and then acts in the direction of automatic closing after the intermediate position.

In the conventional sliding hinges, the operation torque uses a repulsive force (load) generated by a torsion spring or compression spring as an assist force. In other words, the spring arrangement is generally such that one side of the spring is locked to the fist housing 3, whereas the other side of the spring is located rotatably to the second housing 2. Further, in order to obtain a sufficient and necessary assist force, it is necessary to design as appropriate the shape, number, and load of springs used in the sliding hinge.

For example, US Patent No. 2005/0113154 and PCT Application No. 2008-501288 disclose the conventional sliding hinge mechanisms. Further, a sliding hinge is also known that is used in a transversely elongated portable device called a PDA or smartphone, and such a sliding hinge mechanism is disclosed, for example, in Japanese Patent Publication No. 2008-113067. The aforementioned Japanese Patent Publication No. 2008-113067 also discloses a technique of using magnets in combination with a torsion spring with the object of strengthening the joining of the first housing 3 provided with the keyboard with the second housing 2 only in the closed state or completely open position of the sliding hinge.

The abovementioned patent documents disclose configurations in which a telephone conversation, a keyboard operation such as mailing, and a camera operation are performed only at a position in which the second housing 2 provided with the liquid crystal display segment is in either of the completely closed state and completely open state, and fail to disclose the configuration in which the telephone conversation and the like can be performed when the second housing 2 provided with the liquid crystal display segment is fixed at the intermediate position of the slidability region.

Further, a technique for obtaining an attraction or repulsive force with a configuration including only magnets instead of a spring is also known. Such a technique is disclosed for example in WO 2004/112267, Korean Patent Publication No. 10-2004-0105657, and Japanese Patent Publication No. 2008-170000.

In the configuration disclosed in WO 2004/112267, only magnets are used without using springs and a maximum of three sets of rod-shaped magnets having north and south magnetic poles are fixed along both opposite sides in the vertical direction of the first housing 3 and the second housing 2 provided with the liquid crystal display segment in a vertical cellular phone. Three-state positional setting of the closed-state position, intermediate position and open-state position of the second housing 2 can be realized by successively moving one set of magnets fixed to the first housing 3, while causing the attraction force, between the three sets of magnet portions fixed to the second housing 2. In this example, the rod-like magnets in which the north and south magnetic poles are alternately magnetized are disposed along the entire sliding length. In this system, strong elongated magnets are disposed and therefore a shield preventing a leak magnetic flux is indispensible to prevent the device malfunction and effect on people.

In the configuration disclosed in Korean Patent Publication No. 10-2004-0105657, sheet-like large magnets are fixedly attached opposite each other in the central portions of the upper and lower housings of a sliding drive device, the opposing magnets are magnetized to be repulsed from each other, and an assist force that moves the upper and lower housings of the sliding drive device to both ends is obtained by the repulsion of the magnets. However, the patent document does not disclose a mechanism for stopping the upper and lower housings having the magnets disposed in the central portion thereof in the intermediate position during sliding by the attraction caused by magnetic forces.

In the structure described in Japanese Patent Publication No. 2008-170000, magnetic poles are disposed facing each other and a sliding portion is moved to both ends by magnetic lift created by a repulsive force acting between the magnets. No means for stopping the sliding portion at the intermediate position is used in this structure.

EP 1 496 674 A2 discloses a slide-type portable terminal comprising a stopper spring which cooperates with a stopper groove for stopping a sliding operation of the terminal housing.

EP 1 821 500 A2 discloses a multi-directional sliding module for a portable device including a slide, a first track and a second track for guiding the sliding operation of a housing of the module.

EP 1 760 996 A2 discloses a sliding device for a portable terminal which includes a base member, a sliding member, a pair of guide members and multiple step movement members which are formed in the guide members. The multiple step movement members slide with the sliding member and engage the sliding movement member so that the sliding member may be moved in multiple steps.

### SUMMARY OF THE INVENTION

It is an object of the present invention to use an elastic body together with magnets, add a third fixing position substantially in the middle of the slidability region of the opening-closing sliding hinge, and provide a fixing position for operating an electronic device.

It is another object to ensure the operation of the sliding hinge in which the third fixing position is newly set by a magnet system, such that closing and opening operations are performed basically by an assist force provided by a repulsive force of the elastic body, the third fixing position is held by attraction of north and south magnetic poles, the withdrawal from the third fixing position is performed by a combined force of the repulsive force of the north magnetic pole and south magnetic pole and the assist force of the elastic body, thereby ensuring the intermediate position and the opening-closing operation with better modulation than in the mechanism using only the spring.

Considering the spring load characteristic, the torsion spring in the conventional sliding hinge generates the highest load at a substantially intermediate position of the slidability region of any of the operation point. The inventors have recognized that this position is a transition point in which the direction of load is reversed and have set the third fixing position to this transition point.

The hinge mechanism used in the present invention allows the repulsive force of the spring to generate a force in the direction of automatically closing the housing portion before the intermediate position in the sliding region and a force in the direction of automatically and completely opening the housing portion after the intermediate position. The hinge mechanism also possesses a transition point in which the repulsive load of the spring is maximum, the orientation of the operation torque is changed, and a free stop operation is performed at a substantially intermediate position.

As shown in FIG. 5, in the sliding cellular phone, the assist force generated by the torque is zero in the abovementioned transition point, and the movement of the second housing is stopped (free stop) or slowed down. Where an actual cellular phone is used, the force applied by the user's finger during sliding operation is such that the lifting force in the series of operations is strong before the intermediate position and the feeling of light flick is obtained after the intermediate position.

Accordingly, the inventors have succeeded in greatly improving the applicability of portable devices by taking the abovementioned transition point as the third fixing position and setting a fixing means in the third fixing position.

More specifically, the present invention resolves the above-described problem by using the below-described configuration.
(1) An electronic device comprising a sliding hinge mechanism and a first housing provided with an operation section and a second housing provided with a liquid crystal display segment that displays images, wherein the first housing and the second housing are coupled by the sliding hinge mechanism, wherein the sliding hinge has at least an elastic body and magnets, the first housing and the second housing can move relative to each other, the first housing and the second housing can slide from a first fixing position to a second fixing position, the slidability region additionally includes at an intermediate position thereof a third fixing at which the second housing is temporarily fixed, and the third fixing position is a position in which the first housing and the second housing are completely closed.
   A torsion spring is used as the elastic body, the first housing of the sliding hinge has a first housing sliding member, the second housing has a second housing sliding member, the ends of the torsion spring are rotatably locked to the first housing sliding member and the second housing sliding member, respectively, the third fixing position is set to a position at which a repulsive force created by the torsion spring is maximum in the slidability region, and magnets, in which the north and south magnetic poles thereof are arranged facing each other so that attraction forces mutually act upon the first housing sliding member and the second housing sliding member, are disposed at the third fixing position.
   The elastic body used in the present invention may be of any kind, provided that the elastic body can configure a sliding actuator. For example, a torsion spring having a central hoop, a torsion spring without the central hoop, or a compression or tension coil can be used.
(2) The sliding hinge mechanism described in clause (1) above, wherein the magnets are in the form of rectangular parallelepipeds, have a coercive force (Hcj) of equal to or higher than 800 KA/m (10 kOe), and have north and south magnetic poles magnetized on upper and lower surfaces in the sheet thickness direction.
   The sheet thickness of the magnets in the form of rectangular parallelepipeds is preferably equal to or less than 1 mm.
(3) The sliding hinge mechanism described in any one of clauses (1) to (2) above, wherein the magnets are configured such that magnets in the form of rectangular parallelepi peds are disposed facing each other perpendicularly to the movement direction of the first housing and the second housing so as to have a north magnetic pole and a south magnetic pole and exert an attraction force.
(4) The sliding hinge mechanism described in any one of clauses (1) to (3) above, wherein the magnets are configured such that two magnets in the form of rectangular parallelepipeds are disposed parallel to each other and perpendicularly to the movement direction of the first housing and the second housing, disposed so that the surfaces of the magnets exert a north magnetic pole and a south magnetic pole, and disposed so that the north magnetic pole and the south magnetic pole face each other in the magnets disposed at the first housing and the second housing, thereby exerting an attraction force.

The effect demonstrated by the present invention is that the movement of the second housing provided with a liquid crystal display segment of a sliding cellular phone can be newly fixed at an intermediate position of the slidability region. Further, the telephone communication, keyboard operation, and camera operation are possible at a position corresponding to the closed state, intermediate state, and open state of the second housing, and the possibilities of new usage modes are provided in terms of arrangement and setting of buttons and switches.

Further, setting the intermediate third fixing position at a position in which the first housing 3 and the second housing 2 are closed enables an operation of opening the housing section upward and downward and also makes it possible to develop models of new usage modes.

The effect of the present invention that enables the use of the intermediate position in the slidability region is achieved by combined use of an elastic body and magnets, and allows new motions and design variations.

### DETAILED DESCRIPTION OF THE PREFERRED EMBODIMENTS

The sliding hinge mechanism used in the present invention has a configuration such that upper and lower first and second housings can be reliably stopped at a third fixing position which is located in the slidability region, by a combination of a spring and magnets.

In order to stop the first housing and the second housing reliably at the third fixing position, it is particularly preferred that strong magnets having a thin and elongated shape ex tending in the direction perpendicular to the sliding direction be disposed in the vicinity of the third fixing position. With such a configuration, it is possible to realize an attracting movement with nicely modulated click feel.

Further, it is possible to use magnets facing each other and having the surfaces thereof magnetized to a north magnetic pole and a south magnetic pole and hold the upper and lower housings of the sliding hinge by the attraction force acting between the magnets. In this case, the second housing can be moved from the third fixing position to the first or second fixing position by pushing the second housing up or down with a finger.

Further, it is preferred that the magnets used in the sliding hinge mechanism used in the present invention have a coercive force (Hcj) of equal to or higher than 800 kA/m (10 kOe). For example, rare earth magnets that are difficult to demagnetize are preferably used.

In order to ensure modulated movement, it is preferred that the magnets be in the form of rectangular parallelepipeds, have a small thickness and a shape of narrow rods and that the north magnetic pole and south magnetic pole be magnetized on the upper and lower surface in the thickness direction.

Small magnets disposed perpendicular to the sliding direction are useful from the standpoint of cost and magnetic shielding technique that prevents the leak magnetic flux.

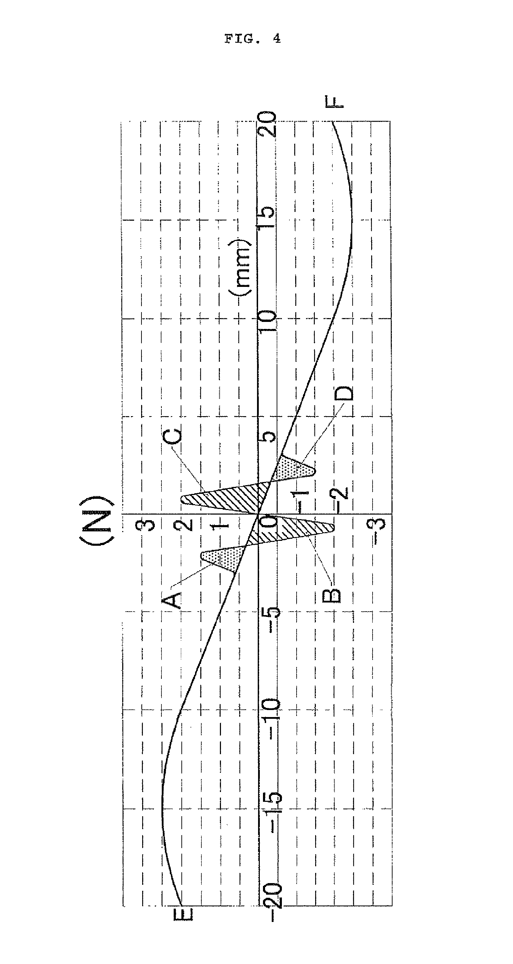

The relationship between the movement distance (mm) and assist force (N) in the sliding hinge mechanism in accordance with the present invention will be explained below. FIG. 4 shows a graph in which the assist force is plotted against the ordinate and the movement distance is plotted against the abscissa. In the figure, the slidability range is 40 mm, a transition point of the spring is at the intermediate of 20 mm (origin point), and the assist force (N) is represented by a positive load (N) before the intermediate point and a negative load at the transition point and thereafter.

In the assist force characteristic of the conventional sliding hinge mechanism, the first fixing position in which the housing portion is completely closed by the closing force E is at a position of -20 mm in the figure, and the second fixing position in which the housing portion is completely open by the opening force F is at a position of +20 mm. The sliding hinge can slide between the E - 0 (origin point) - F. The assist force is positive between -20 mm and 0, and therefore the sliding hinge acts in the direction of closing the second housing provided with the liquid crystal display segment. Conversely, the assist force is negative between 0 and 20 mm and therefore the force automatically acts in the direction of completely opening the second housing.

The dotted portions (A, D) and hatched portions (B, C) close to the origin point of the characteristic curve show the effect of magnets used in the sliding hinge mechanism in accordance with the present invention in comparison with that obtained in the conventional configuration. The dotted portions (A, D) show repulsive forces from the same magnetic polarity generated between the magnet of the first housing sliding member and the magnet of the second housing sliding member. The hatched portions (B, C) close to the origin point show attraction forces from opposite magnetic polarity generated between the two magnets.

The mechanism for fixing the movement of the first housing sliding member with respect to the second housing sliding member at the intermediate third fixing position will be described below. By contrast with the conventional sliding hinge, between the two magnets as the origin point 0 in FIG. 4 is approached, a large attraction force (B) or (C) with a reversed force direction is generated following the repulsive force (A) or (D).

Therefore, the first housing sliding member initially receives a return force in a direction opposite to the movement due to the action of the repulsive force (A) or (D), but where the first housing sliding member is further pushed up by a hand to the origin point 0, the first housing sliding member is forcibly moved and fixed at the origin point 0 with modulation by the attraction force (B) or (C).

Where an attempt is made to move the first housing sliding member further from the origin point 0 (third fixing position), the attraction force (B, C) tries to return the first housing sliding member to the origin point 0. The modulated movement occurring in the vicinity of the origin point 0 according to the present application can be provided with an abrupt change of the assist force that is different from that of the conventional configuration by disposing a pair of magnets in the form of narrower rectangular parallelepipeds close to each other in the direction perpendicular to the sliding direction.

The movement of the housing in the sliding hinge mechanism used in the present invention will be explained below with reference to FIG. 5. FIGS. 5(a) and 5(b) illustrate the conventional sliding hinge mechanism, and FIGS. 5(c), 5(d), and 5(e) illustrate a sliding cellular phone 1 incorporating the sliding hinge mechanism in accordance with the present invention. The sliding cellular phone 1 has a second housing 2 provided with a liquid crystal display segment, a first housing 3 provided with a keyboard, a liquid crystal screen 4, a keyboard 5, functional key portions 6, 7, 8, and 9, and an external connection terminal 10. In the conventional cellular phone 1, the opening-closing movement relative to the first housing 3 can be performed only between the first fixing position in which the second housing 2 is closed (this fixing position is shown in FIG. 5(a)) and the second fixing position in which the second housing 2 is completely open (this fixing position is shown in FIG. 5(b)).

FIGS. 5(c), 5(d), and 5(e) are schematic drawings illustrating the movement of the cellular phone incorporating the sliding hinge mechanism in accordance with the present invention.

The hinge used in the present invention in which the third fixing position is newly provided in the intermediate position by the attraction force of magnets provides a sliding cellular phone in which two below described types of movement can be performed.

Firstly, as compared to the movement realized in the conventional device, in the present invention the third fixing position is added in the intermediate zone, and three fixing positions are configured in which key operations can be performed between (a) ←→ third fixing position (d) ←→ (b) shown in the figure.

Secondly, by setting the intermediate third fixing position as a completely closed position, the (d) ←→ (c) intermediate position ←→ (e) movement is realized, and the operation of moving the second housing 2 provided with the liquid crystal up and down with respect to the center as a starting point can be performed, and such an operation cannot be realized in the conventional device.

In the explanation above, the vertically slidable cellular phone is considered, but a transverse sliding system can be also used. In addition, the sliding hinge mechanism can be applied not only to cellular phones, but also to electronic devices such as PDA.

Example embodiments of the present invention will be described below with reference to the appended drawings. The embodiments described hereinbelow are merely examples of the present invention, and the present invention is not limited to the below-described embodiments.

### Embodiment 1

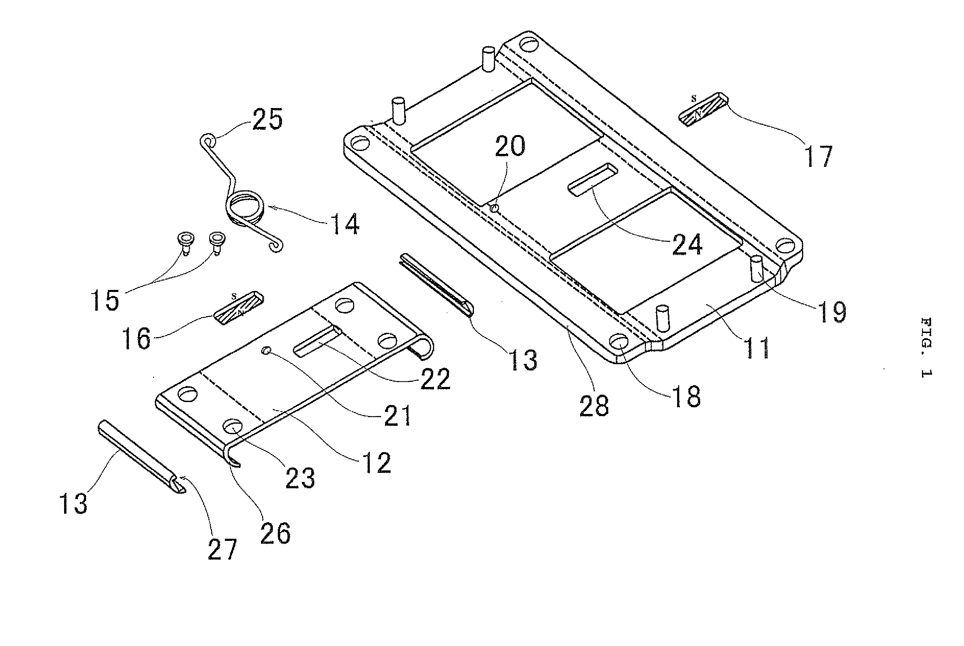

FIG. 1 is an exploded view illustrating an example embodiment of the sliding hinge mechanism used in the present invention.

In the sliding hinge mechanism according to Embodiment 1, a first housing sliding member 12 and a second housing sliding member 11 are coupled by a torsion spring 14.

Here, the first housing sliding member 12 is obtained by pressing a thin sheet of stainless steel or molding a resin and provided with a hole 21 for inserting and fixing a fixing pin 15 of the torsion spring 14, a hole 22 for attaching a magnet 16, a hole 23 for fixing, with a screw or the like, to a first housing 3 provided with a keyboards, and circular-arc portions 26 for fixedly attaching lubricating resin guides 13.

The second housing sliding member 11 is obtained by pressing a thin sheet of stainless steel and provided with a hole 18 for fixing, with a screw or the like, to a second housing 2 provided with a liquid crystal display segment, stopper pins 19 that determine the upper and lower limits of a sliding region, a hole 20 for inserting and fixing the fixing pin 15 of the torsion spring 14, a hole 24 for attaching a magnet 17, and sliding surfaces 28 on both sides. The sliding members 11 and 12 are preferably made from a nonmagnetic material.

The permanent magnets 16 and 17 have magnetized north and south magnetic poles on the upper and lower surfaces of a thin sheet. The torsion spring 14 is provided with round hooks 25 at both ends, and the hook 25 has an inner diameter enabling rotation when the torsion spring is externally fitted on and fixed to the fixing pin 15.

The lubricating resin guides 13 are formed in a concave shape suitable for fitting therein the sliding surfaces 28 located on both sides of the second housing sliding member 11. The magnets may be also fixedly attached to the first and second sliding members 11, 12 with an adhesive or a pressure-sensitive adhesive tape, and in this case the holed 22 and 24 are omitted.

### Embodiment 2

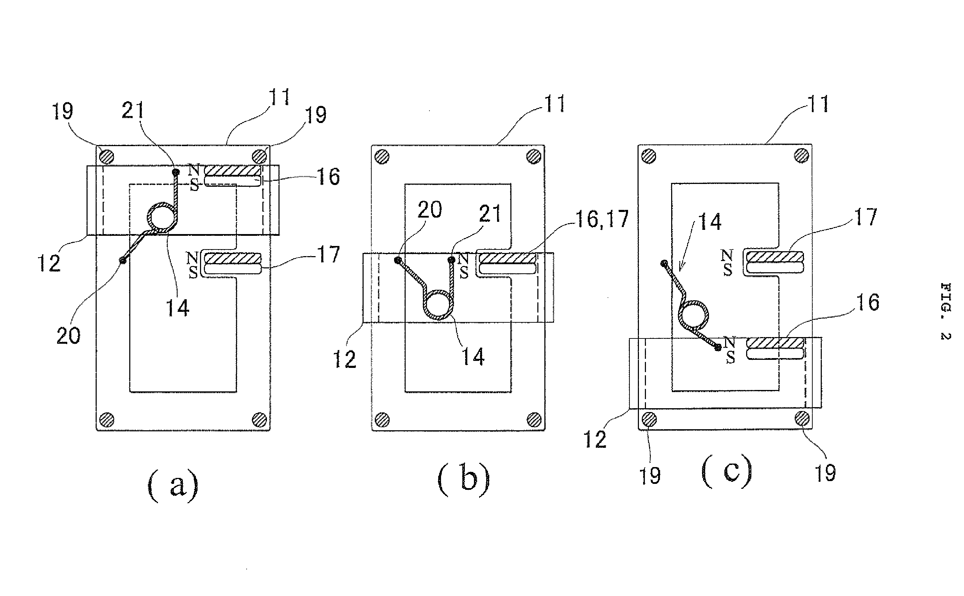

FIG. 2 is a plan schematic drawing illustrating the configuration and movement of the sliding hinge mechanism according to Embodiment 2 in which a third fixing position is newly disposed at an intermediate position of the slidability region by using magnets. Members having functions identical to those of Embodiment 1 are denoted by like reference numerals.

As shown in FIG. 1, the lubricating resin guides 13 and magnets 16, 17 are set at the first housing sliding member 12 and the second housing sliding member 11.

The sliding surfaces 28 of the second housing sliding member 11 are internally fitted into grooves 27 of the lubricating resin guides 13 that have been set at both sides of the first housing sliding member 12. The stoppers 19 that restrict the slidability region and both end hooks 25 of the torsion spring 14 for generating a sliding assist force are then fixed with the fixing pins 15. This operation completes the assembly of the sliding hinge mechanism.

In FIG. 2, the torsion spring 14 that is disposed essentially below the first housing sliding member 12 cannot be seen partially or entirely and, therefore, is shown by hatching for the purpose of explanation.

With the sliding hinge mechanism of the present embodiment, when the mechanism is incorporated in a cellular phone, the second housing 2 provided with a liquid crystal display segment is fixedly attached to the second housing sliding member 11, and the first housing 3 provided with a keyboard is fixedly attached to the first housing sliding member 12. It goes without saying that the assembly of the housings and the sliding members therefor may be reversed.

FIG. 2(a) shows a first fixing position in which the first housing 3 and the second housing 2 (not shown in the figure) are closed. At this position, the first housing sliding member 12 is pressed by the assist force of the torsion spring 14 to the stoppers 19 disposed on the second housing sliding member 11.

Referring to FIG. 2(a), the magnets 16, 17 are disposed perpendicular to the sliding movement direction at the sliding members 11, 12 for the first and second housings, respectively. Initially the surfaces of the two magnets are disposed parallel to each other so that the north magnetic pole and south magnetic pole can be seen, and then the north magnetic pole and south magnetic pole are disposed facing each other so that an attraction force acts between the magnets disposed between the sliding members 11, 12. Although not shown in the figure, in the magnetic poles of the magnet 16 disposed at the first housing sliding member 12, the sides facing the magnet 17 are magnetized to south and north poles in reverse to those shown in the figure.

More specifically, in the magnet 16, the north pole is disposed on the lower surface side, and in the magnet 17, the south pole is disposed on the upper surface side. It goes without saying, that the arrangement of magnetic poles may be reversed with respect to that described above.

FIG. 2(b) shows a state in which the first housing 3 and the second housing 2 (not shown in the figure) are at the intermediate third fixing position, an attraction force acts between the magnet 16 disposed at the first housing sliding member 12 and the magnet 17 disposed at the second housing sliding member 11, and the movement is stopped. In this case, the torsion spring 14 is designed to be positioned at a transition point in which the distance between the attachment positions 20 and 21 is minimal and a maximum load is generated, but the assist force is minimal.

FIG. 2(c) illustrates the second fixing position in which the first housing 3 and the second housing 2 are open. In this state, the first housing sliding member 12 is pressed by the assist force of the torsion spring 14 to the stoppers 19 disposed at the second housing sliding member 11. The movement is performed in reverse when the configuration is closed.

### Embodiment 3

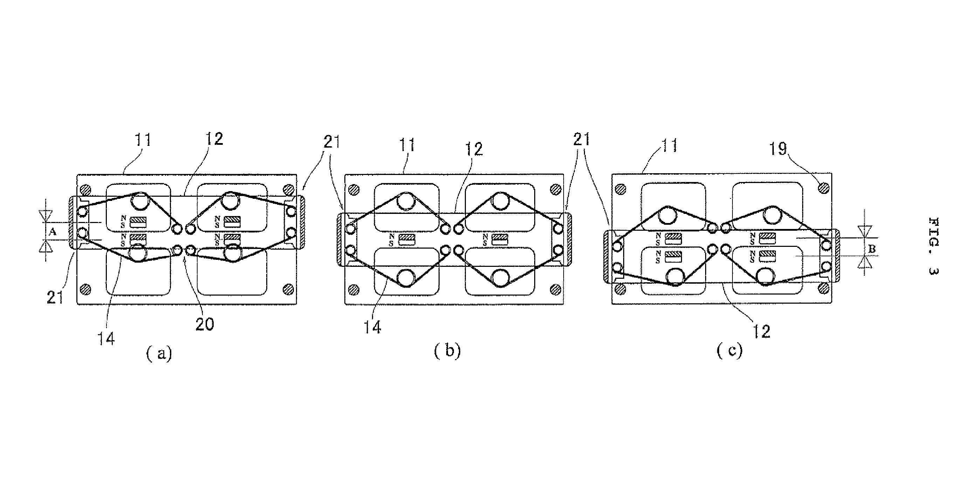

FIG. 3 is a plan schematic drawing illustrating the configuration and movement of the sliding hinge mechanism for a transverse cellular phone in which an intermediate third fixing position is newly disposed in the slidability region by using magnets. FIG. 3 illustrates a mode of application to a transverse cellular phone with a large and heavy liquid crystal display segment. In this example, four torsion springs and two, left and right, magnet sets are used because large assist force and attraction force in the third fixing position should be ensured. The torsion spring 14 is disposed essentially below the first housing sliding member 12 and not seen at all. However, the torsion spring is shown by hatching for the sake of convenience of explanation. The members having functions identical to those of the members in Embodiment 1 and Embodiment 2 are denoted by reference numerals shown in FIG. 1 and FIG. 2.

FIG. 3(a) shows a state in which the first housing sliding member 12 is disposed at the first fixing position located at a distance A from the central line of the third fixing position. FIG. 3(b) shows a state in which the first housing sliding member 12 is disposed at the intermediate third fixing position. FIG. 3(c) shows a state in which the first housing sliding member 12 is completely open and disposed at the second fixing position at a distance B from the central line of the third fixing position. The slidability region of the hinge shown in FIG. 3 is (A + B).

In Embodiment 2, the case is explained in which the first housing sliding member 12 moves with respect to the second housing sliding member 11 to open from the closed position in the sequence of FIG. 2(a) ® FIG. 2(b) ® FIG. 2(c) and to close in the reverse sequence.

Where the arrangement state in which the intermediate third fixing position (b) in FIG. 3 is closed is taken as a start position, it is possible to provide a new usage mode in which the position of the first housing sliding member 12 shown in FIG. 3(a), which is separated by A from the intermediate first fixing position, is the first fixing position corresponding to the completely open state, or the position of the first housing sliding member 12 shown in FIG. 3(c), which is separated by B from the intermediate first fixing position, is the second fixing position corresponding to the completely open state.

In FIG. 3 the case is explained in which the third fixing position is in the center of the sliding region. This third fixing position can be shifted to a new position with different distances A and B by changing the attachment positions of magnets or by changing the arm length, bending angle, and attachment positions of the torsion springs 14.

For example, a variation of the arrangement mode of operation sections or the like can be added by enabling the movement from the state shown in FIG. 5(c) to that shown in FIG. 5(d) and from the state shown in FIG. 5(c) to that shown in FIG. 5(e).

## Claims

1. An electronic device comprising a sliding hinge mechanism and a first housing (3) provided with an operation section and a second housing (2) provided with a liquid crystal display segment that displays images, wherein the first housing (3) and the second housing (2) are coupled by the sliding hinge mechanism, wherein the sliding hinge has at least an elastic body and magnets, the first housing (3) and the second housing (2) are adapted to move relative to each other, the first housing (3) and the second housing (2) are adapted to slide from a first fixing position to a second fixing position in a slidability region, wherein the slidability region additionally includes at an intermediate position thereof a third fixing (b) at which the second housing (2) is temporarily fixed, and the third fixing position is a position in which the first housing (3) and the second housing (2) are completely closed,
**characterized in that**
a torsion spring (14) is used as the elastic body, the first housing (3) of the sliding hinge mechanism has a first housing sliding member (12), the second housing (2) has a second housing sliding member (11), the ends of the torsion spring (14) are rotatably locked to the first housing sliding member (12) and the second housing sliding member (11), respectively, the third fixing position (b) is set to a position at which a repulsive force created by the torsion spring (14) is maximum in the slidability region, and magnets (16, 17), in which the north (N) and south (S) magnetic poles thereof are arranged facing each other so that attraction forces mutually act upon the first housing sliding member (12) and the second housing sliding member (11), are disposed at the third fixing position (b).

2. The electronic device according to claim 1, wherein the magnets (16, 17) are in the form of rectangular parallelepipeds, have a coercive force (Hcj) of equal to or higher than 800 KA/m (10 kOe), and have north and south magnetic poles magnetized on upper and lower surfaces in the sheet thickness direction.

3. The electronic device according to any one of claims 1 through 2, wherein the magnets (16, 17) are configured such that magnets in the form of rectangular parallelepipeds are disposed facing each other perpendicularly to the movement direction of the first housing (3) and the second housing (2) so as to have a north magnetic (N) pole and a south magnetic pole (S) and exert an attraction force.

4. The electronic device according to any one of claims 1 through 2, wherein the magnets (16, 17) are configured such that two magnets (16, 17) in the form of rectangular parallelepipeds are disposed parallel to each other and perpendicularly to the movement direction of the first housing (3) and the second housing (2), disposed so that the surfaces of the magnets exert a north magnetic (N) pole and a south magnetic (S) pole, and disposed so that the north magnetic (N) pole and the south magnetic (S) pole face each other in the magnets (16, 17) disposed at the first housing (3) and the second housing (2), thereby exerting an attraction force.

## Patentansprüche

1. Elektronische Vorrichtung, die einen Gleitscharniermechanismus und ein erstes Gehäuse (3), das mit einem Bedienabschnitt versehen ist, und ein zweites Gehäuse (2), das mit einem Flüssigkristallanzeigenelement versehen ist, das Bilder anzeigt, umfasst, wobei das erste Gehäuse (3) und das zweite Gehäuse (2) durch den Gleitscharniermechanismus miteinander verbunden sind, wobei das Gleitscharnier mindestens einen elastischen Körper und Magneten aufweist, das erste Gehäuse (3) und das zweite Gehäuse (2) dafür ausgelegt sind, sich relativ zueinander zu bewegen, das erste Gehäuse (3) und das zweite Gehäuse (2) dafür ausgelegt sind, in einem Gleitfähigkeitsbereich von einer ersten Befestigungsposition zu einer zweiten Befestigungsposition zu gleiten, wobei der Gleitfähigkeitsbereich an einer Zwischenposition zusätzlich eine dritte Befestigungsposition (b) enthält, an der das zweite Gehäuse (2) zeitweilig befestigt ist, und die dritte Befestigungsposition einer Position entspricht, in der das erste Gehäuse (3) und das zweite Gehäuse (2) vollständig geschlossen sind,
**dadurch gekennzeichnet, dass**
eine Torsionsfeder (14) als der elastische Körper verwendet wird, das erste Gehäuse (3) des Gleitscharniermechanismus ein erstes Gehäusegleitelement (12) aufweist, das zweite Gehäuse (2) ein zweites Gehäusegleitelement (11) aufweist, die Enden der Torsionsfeder (14) drehbar in dem ersten Gehäusegleitelement (12) bzw. dem zweiten Gehäusegleitelement (11) eingerastet sind, die dritte Befestigungsposition (b) an eine Position gesetzt ist, an der eine von der Torsionsfeder erzeugte Abstoßungskraft in dem Gleitfähigkeitsbereich maximal ist, und Magneten (16, 17), deren magnetische Nord (N)- und Süd (S)-Pole einander gegenüberliegend angeordnet sind, so dass Anziehungskräfte gegenseitig auf das erste Gehäusegleitelement (12) und das zweite Gehäusegleitelement (11) wirken, an der dritten Befestigungsposition (b) angeordnet sind.

2. Elektronische Vorrichtung nach Anspruch 1, wobei die Magneten (16, 17) die Form rechtwinkliger Parallelepipede aufweisen, eine Koerzitivkraft (Hcj) von größer oder gleich 800 KA/m (10 kOe) aufweisen und magnetische Nord- und Südpole aufweisen, die in Richtung der Plattendicke auf oberen und unteren Flächen magnetisiert sind.

3. Elektronische Vorrichtung nach einem der Ansprüche 1 bis 2, wobei die Magneten (16, 17) derart konfiguriert sind, dass Magneten in der Form rechtwinkliger Parallelepipede einander senkrecht zu der Bewegungsrichtung des ersten Gehäuses (3) und des zweiten Gehäuses (2) gegenüberliegend angeordnet sind, um einen magnetischen Nordpol (N) und einen magnetischen Südpol (S) aufzuweisen und eine Anziehungskraft ausüben.

4. Elektronische Vorrichtung nach einem der Ansprüche 1 bis 2, wobei die Magneten (16, 17) derart konfiguriert sind, dass zwei Magneten in der Form rechtwinkliger Parallelepipede parallel zueinander und senkrecht zu der Bewegungsrichtung des ersten Gehäuses (3) und des zweiten Gehäuses (2) gegenüberliegend angeordnet sind, derart angeordnet sind, dass die Oberflächen der Magneten einen magnetischen Nordpol (N) und einen magnetischen Südpol (S) bilden, und derart angeordnet sind, dass der magnetischen Nordpol (N) und der magnetische Südpol (S) einander in den Magneten (16, 17), die in dem ersten Gehäuse (3) und dem zweiten Gehäuse (2) angeordnet sind, einander gegenüberliegen und hierbei eine Anziehungskraft ausüben.

## Revendications

1. Dispositif électronique comportant une charnière coulissante et un premier boîtier (3) muni d'une zone d'actionnement et un second boîtier (2) muni d'une partie d'affichage à cristaux liquides affichant des images, où le premier boîtier (3) et le second boîtier (2) sont couplés par la charnière coulissante, où la charnière coulissante comprend au moins un corps élastique et des aimants, le premier boîtier (3) et le second boîtier (2) sont adaptés à se déplacer l'un par rapport à l'autre, le premier boîtier (3) et le second boîtier (2) sont adaptés à coulisser entre une première position fixe et une deuxième position fixe dans une zone de coulissement, où la zone de coulissement comprend en outre, en une position intermédiaire, une troisième position fixe (b) dans laquelle le second boîtier (2) est temporairement fixe, et la troisième position fixe est une position dans laquelle le premier boîtier (3) et le deuxième boîtier (2) sont complètement fermés,
**caractérisé en ce que**
un ressort de torsion (14) est utilisé en tant que corps élastique, le premier boîtier (3) de la charnière coulissante comprend un organe coulissant de premier boîtier (12), le second boîtier (2) comprend un organe coulissant de second boîtier (11), les extrémités du ressort de torsion (14) sont respectivement attachées en rotation à l'organe coulissant de premier boîtier (12) et à l'organe coulissant de second boîtier (11), la troisième position fixe (b) est une position dans laquelle une force répulsive générée par le ressort de torsion (14) est maximale dans la zone de coulissement, et des aimants (16, 17), dont les pôles magnétiques nord (N) et sud (S) sont disposés de manière à se faire face, de sorte que des forces d'attraction agissent mutuellement sur l'organe coulissant de premier boîtier (12) et l'organe coulissant de second boîtier (11), sont disposés au niveau de la troisième position fixe (b).

2. Dispositif électronique selon la revendication 1, où les aimants (16, 17) ont une forme de parallélépipèdes rectangles, ont une force coercitive (Hcj) égale ou supérieure à 800 KA/m (10 kOe) et ont des pôles magnétiques nord et sud magnétisés sur des surfaces supérieures et inférieures dans la direction de l'épaisseur de la plaque.

3. Dispositif électronique selon l'une quelconque des revendications 1 à 2, où les aimants (16, 17) sont configurés de manière à ce que des aimants en forme de parallélépipède rectangle soient disposés face à face perpendiculairement à la direction de mouvement du premier boîtier (3) et du second boîtier (2) de manière à obtenir un pôle magnétique nord (N) et un pôle magnétique sud (S) et à exercer une force d'attraction.

4. Dispositif électronique selon l'une quelconque des revendications 1 à 2, où les aimants (16, 17) sont configurés de manière à ce que deux aimants (16, 17) en forme de parallélépipèdes rectangles soient disposés parallèlement l'un par rapport à l'autre et perpendiculairement à la direction de mouvement du premier boîtier (3) et du second boîtier (2), disposés de manière à ce que les surfaces des aimants exercent un pôle magnétique nord (N) et un pôle magnétique sud (S), et disposés de manière à ce que le pôle magnétique nord (N) et le pôle magnétique sud (S) se font face dans les aimants (16, 17) disposés au niveau du premier boîtier (3) et du second boîtier (2), exerçant ainsi une force d'attraction.
